Europäisches Patentamt

European Patent Office

Office européen des brevets

(11) Publication number: **0 047 439**
**B1**

# (12) EUROPEAN PATENT SPECIFICATION

(45) Date of publication of patent specification: 22.04.87   (51) Int. Cl.⁴: **G 06 F 13/00**

(21) Application number: **81106649.7**

(22) Date of filing: **26.08.81**

---

(54) Address expanding system.

---

(30) Priority: **09.09.80 JP 124092/80**

(43) Date of publication of application:
**17.03.82 Bulletin 82/11**

(45) Publication of the grant of the patent:
**22.04.87 Bulletin 87/17**

(84) Designated Contracting States:
**DE GB**

(56) References cited:
**EP-A-0 010 185**
**FR-A-2 254 827**
**GB-A-2 025 097**
**US-A-3 949 378**

(73) Proprietor: **Kabushiki Kaisha Toshiba
72, Horikawa-cho Saiwai-ku
Kawasaki-shi Kanagawa-ken 210 (JP)**

(72) Inventor: **Yamazaki, Isamu
305 Asahi-saginuma-mansion, 1-6-1
Saginuma Takatsu-ku Kawasaki-shi (JP)**

(74) Representative: **Henkel, Feiler, Hänzel & Partner
Möhlstrasse 37
D-8000 München 80 (DE)**

EP 0 047 439 B1

Courier Press, Leamington Spa, England.

## Description

This invention relates to an address expanding system of a computer.

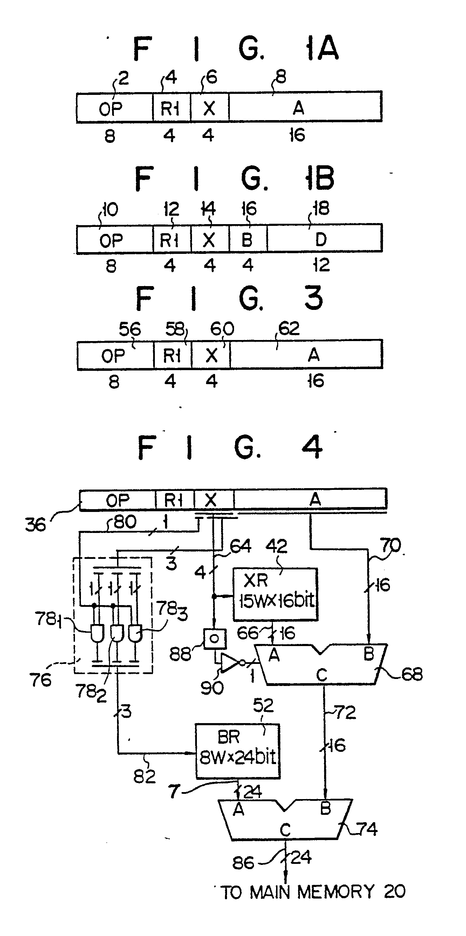

Various methods of address modification are known. Fig. 1A shows a format of instruction used in a computer TOSBAC-40 manufactured by Toshiba Corporation, Japan. Fig. 1B shows a format of instruction used in computer systems 360 and 370 manufactured by International Business Machines, Inc., U.S.A. The instruction of Fig. 1A comprises an 8-bit OP field 2 for specifying an operation code (hereinafter called "OP code") a 4-bit R1 operation field 4 for specifying a first operand, a 4-bit X field 6 for specifying one of index registers and a 16-bit A field 8 for specifying a byte-unit address (64 KB at maximum). In this architecture, a programming can be effected in an addressing space of only 64 KB at maximum. The instruction of Fig. 1B comprises an 8-bit OP field 10 for specifying an OP code, a 4-bit R1 field 12 for specifying a first operand, a 4-bit X field 14 for specifying one of index registers, a 4-bit B field 16 for specifying one of base registers and a 12-bit D field 18 for specifying displacement (byte address) of 4 KB at maximum.

In either the computer system 360 or the computer system 370, the index registers comprise 32 bits each, and the base registers comprise 24 bits each. The index modification and the base modification can be performed simultaneously. The main memory of the computer system is constituted by segments of various sizes. The start addresses of these segments are stored in the base registers. The span of the largest segment is 4 KB. (The word "span" means a memory area which can be specified by address value stored in one base register). The maximum span being 4 KB, it is hard for a programmer to make a program. Suppose at the initial stage of programming a programmer estimates that a desired program is within a memory capacity of 4 KB, and that in the final stage of programming, however, he finds out that the program exceeds the memory capacity of 4 KB. Then, the programmer must use two segments or must change the contents of the base registers at a certain stage of programming. If the contents of the base registers are changed, the resultant program will be complex, which is the main cause of bug.

Document US—A—3,949,378 discloses a memory addressing system similar to the system as described in the precharacterizing part of claim 1. The method employed in this known memory addressing system involves a dual usage of a B index designator in each instruction word so that in addition to its normal function of specifying which index register is to be added to the address portion of an instruction, it also specifies which base register is to be arithmetically added to a basic bit-address to determine the final bit absolute memory location address.

Furthermore, documents FR—A—2,254,827 and GB—A—2,025,097 disclose address generating devices in which a base register address generating means comprises a mapping table consisting of a plurality of registers, and adding means consist of an arithmetic logic unit.

It is an object of the present invention to eliminate the above-mentioned difficulty in programming and to provide an improved address expanding system having a better use of a modification field.

To achieve this object, the present invention provides an address expanding system comprising: a main memory, an instruction register which is coupled to said main memory and stores an instruction read out from said main memory, said instruction including a common address modification field for specifying an index address modification and a base address modification, and a displacement, a plurality of general registers which are connected through a bus to the instruction register, the contents of one of said general registers being added to make a memory address in the index address modification, a plurality of base registers which are coupled through the bus to the instruction register, the contents of one of said base registers being added to make a memory address in the base address modification, base register address generating means which receives a first data from the common address modification field and produces a second data for specifying one of the base registers, and adding means which is coupled to said instruction register, said general registers and said base registers and which adds the contents of said displacement, said general register and said base register, wherein said adding means comprises: a first adder which is coupled to said general registers and the instruction register and which adds the contents of one of said general registers and those of said displacement for the index address modification, and a second adder which is connected to said base registers and said first adder and which adds the contents of one of said base registers and those of said first adder for the base address modification, said address expanding system being characterized in that said base register address generating means comprises a code converting logic connected between said common address modification field, all bits of which are used both for specifying a base register address and a general register address, and said plurality of base registers for specifying one of the base registers, and address modification inhibiting means is coupled to the common address modification field of said instruction register and said first adder to inhibit the addition of the contents of one of the general registers and passing the contents of said displacement, thus effecting only base address modification.

In the address expanding system of this invention, an index register specifying field for specifying index address modification is assigned in a common field of an instruction. And so is a base register specifying field for specifying base address modification.

The invention has the following features:

(1) The expansion of an address space can be effected. (It can be effected unlimitedly by increasing the number of bits which comprises the base registers).

(2) The maximum capacity of one segment can be broadened.

(3) The software which has been used in prior art can be directly used.

(4) The range of memory capacity specified by the address value stored in the index register equals to the range of memory capacity specified by an immediate address specifying field A (64 KB).

(5) Subtraction can be effected, in which the address value specified in the immediate address specifying field A is subtracted from the address value specified by the contents of the index register.

(6) Almost no impact effects the prior art instruction system.

(7) A memory management can be effected in segment unit.

Other objects and features of the invention will be apparent from the following description taken in connection with the accompanying drawings.

Figs. 1A and 1B show formats of instruction used in prior art systems;

Fig. 2 shows a block diagram of a data processor to which an address expanding system according to the invention is applied;

Fig. 3 shows a format of instruction used in the embodiment of the present invention;

Fig. 4 is a block diagram of an embodiment of the invention; and

Fig. 5 is a block diagram of another embodiment of the invention.

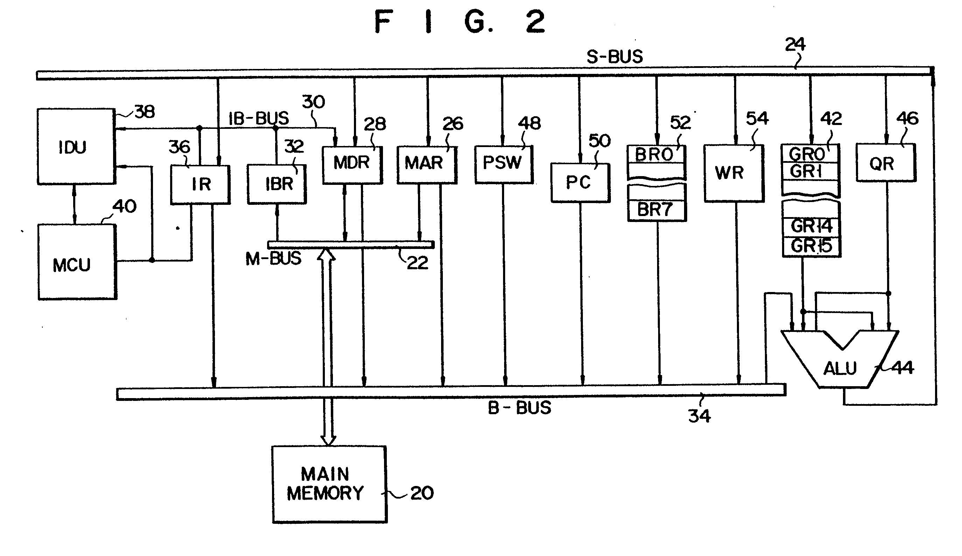

Fig. 2 is a block diagram of a data processor to which an address expanding system according to the invention is applied. As shown in Fig. 2, a main memory 20 is coupled with a memory bus (M-BUS) 22. Between the M-BUS 22 and a source bus (S-BUS) 24 is inserted a memory address register (MAR) 26. The MAR 26 stores an address of the main memory 20. Connected also between the M-BUS 22 and the S-BUS 24 is a memory data register (MDR) 28. The MDR 28 stores data read from the main memory 20 or data to be stored into the main memory 20. The MDR 28 is connected to an instruction buffer bus (IB-BUS). Further provided is an instruction buffer register (IBR) 32 which is connected between the S-BUS 24 and a destination bus (B-BUS) 34 and which is connected also to the IB-BUS 30. An instruction code is loaded from the main memory 20 into the IBR 32 through the M-BUS 22. The code is then loaded from the IBR 32 into an instruction register (IR) 36 via the IB-BUS 30.

An instruction decoding unit (IDU) 38 is connected to the IB-BUS 30 for decoding the instruction loaded in the IR 36. A microprogram control unit (MCU) 40 controls the operation of a microprogram in accordance with an instruction from the IDU 38. The IR 36 and the MCU 40 are connected to each other. To the S-BUS 24 there is connected a general register file 42 which comprises 16 registers GR0 to GR15. The general registers GR0 to GR15 are used as arithmetic registers, data registers, or the like.

In the embodiment of Fig. 2 the general registers GR0 to GR15 are used as index registers. To the general register file 42 an arithmetic and logic unit (ALU) 44 is connected. The ALU 44 is connected also to the B-BUS 34 and a quotient register 46. The ALU 44 performs various arithmetic operations and logical operations. The quotient register 46 is connected to the S-BUS 24 for temporarily storing the result of the operation performed by the ALU 44. Connected between the S-BUS 24 and the B-BUS 34 is a program status word register (PSW) 48 which stores interrupt levels or various flags such as a carry flag, a sign flag or a zero flag when a program is executed. Connected also between the S-BUS 24 and the B-BUS 34 is a program counter 50 which stores an address of the instruction to be executed next. Connected also between the S-BUS 24 and the B-BUS 34 is a base register file 52 which comprises eight registers BR0 to BR7. Each of these registers BR0 to BR7 stores a base address which specifies the start address of a segment in the main memory 20. Further, between the S-BUS 24 and the B-BUS 34 there is connected a working register 54 which is used as a temporary buffer when microinstructions of the microprogram are executed.

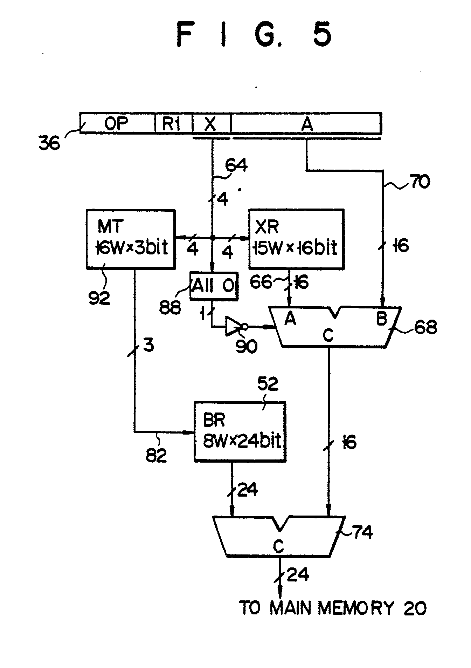

Fig. 3 shows a format of instruction used in the embodiment of Fig. 2. The instruction comprises an 8-bit operation (OP) field 56 for specifying an operation to be done, a 4-bit R1 field 58 for specifying a first operand, a 4-bit X field 60 for specifying one of the index registers (i.e. general registers GR1 to GR15 of the general register file 42) and one of the base registers BR0 to BR7 for achieving index address modification and base address modification, and a 16 bit A field 62 for specifying the address (displacement) of 64 KB at maximum.

Fig. 4 is a block diagram of the embodiment of the invention. In Fig. 4, like parts are designated by numerals identical with those used in Fig. 2 and are not described here in detail. From an IR 36 a 4-bit address data recorded in the X field 60 is supplied through a line 64 to the general register file 42. The contents of one of the index registers (i.e. general registers GR1 to GR15 of the file 42) are supplied through a line 66 to one input port A of a first adder 68. To the other input port B of the first adder 68 a 6-bit address data of the A field 62 is supplied.

The first adder 68 accumulates the address data supplied to both input ports A and B and supplies the result of addition through a line 72 to the input port B of a second adder 74. In the meantime, the 4-bit address data of the X field 60 is supplied to a code converting logic 76 which comprises three AND gates $78_1$, $78_2$ and $78_3$. To one input terminal of each AND gate a 1-bit data, for example MSB of the X field 60, is supplied through a line 80. To the other input terminals of the AND gates $78_1$, $78_2$

and $78_3$ the remaining three bits of the X field 60 are supplied, respectively. The code converting logic 76 produces an ANDed output, which is supplied through a line 82 to the base register file 52, thus specifying one of the base registers BR0 to BR7. The contents of one base register specified are supplied through a line 7 to the input port A of the second adder 74. The second adder 74 accumulates the address data supplied to both input ports A and B and supplies the result of addition through a line 86 to a main memory 20.

The index registers correspond to the base registers specified by the contents of the X field, as shown in the following table:

TABLE 1

| X | XR | BR |
|---|----|----|
| 0 | — | 0 |
| 1 | 1 | 0 |
| 2 | 2 | 0 |
| 3 | 3 | 0 |
| 4 | 4 | 0 |
| 5 | 5 | 0 |
| 6 | 6 | 0 |
| 7 | 7 | 0 |
| 8 | 8 | 0 |
| 9 | 9 | 1 |
| 10 | 10 | 2 |
| 11 | 11 | 3 |
| 12 | 12 | 4 |
| 13 | 13 | 5 |
| 14 | 14 | 6 |
| 15 | 15 | 7 |

Suppose a base address is loaded in the base register BR0, said base address specifying a base of a segment to which an instruction using the base register BR0 is allocated. Then, when the next instruction is fetched, the physical address for the next instruction is produced by adding the value of the base register BR0 to the contents of a location counter (not shown).

Therefore, when X=0, no index modification is effected and the address of the second operand is assumed to be the address A within the segment of the program. When X=1 to 8, the address of the second operand is within the segment of the program, which is specified by the base register BR0, and is modified by one of the index registers XR1 to XR8 (i.e. general registers GR1 to GR8). When X=9 to 15, the address of the second operand is within the segment specified by one of the base registers BR1 to BR7 and is modified by one of the index registers XR9 to XR15 (i.e. general registers GR9 to GR15).

As shown in Fig. 4, a NOR gate 88 is connected to receive the 4-bit data of the X field 60. The NOR gate 88 produces a logic "1" signal when all the four bits are of logic "0". The output signal of the NOR gate 88 is inverted by an inverter 90. Therefore, a logic "0" signal is supplied to the first adder 68 only when all the four bits in X field are of logic "0", as an ENABLE signal. The first adder 68 therefore carries out no addition and supplies the 16-bit data from the A field 62 through the output port C to the second adder 74. Thus, no index modification is effected when X field equals zero.

Fig. 5 is a block diagram of another embodiment of the invention. In Fig. 5, like parts are denoted by numerals identical with those used in Fig. 4 and are not described here in detail. This embodiment uses a mapping table (MT) 92 in place of such a code converting logic as used in the embodiment of Fig. 4. The MT 92 comprises sixteen 3-bit registers. The MT 92 has such a configuration as illustrated in the following table.

TABLE 2

| X | XR | BR |
|---|----|------|
| 0 | — | M[0] |
| 1 | 1 | M[1] |
| 2 | 2 | M[2] |
| 3 | 3 | M[3] |
| 4 | 4 | M[4] |
| 5 | 5 | M[5] |
| 6 | 6 | M[6] |
| 7 | 7 | M[7] |
| 8 | 8 | M[8] |
| 9 | 9 | M[9] |
| 10 | 10 | M[10] |
| 11 | 11 | M[11] |
| 12 | 12 | M[12] |
| 13 | 13 | M[13] |
| 14 | 14 | M[14] |
| 15 | 15 | M[15] |

In this embodiment, the MT 92 is so designed as to receive the contents of the X field 60 and to output mapping address M[X]. Therefore, when the 4-bit data from the X field 60 is supplied to the MT 92, the MT 92 converts the input data into a mapping address, which specifies one of the base registers. There is no predefined correspondence between the contents of the X field 60 and the base register address. Various correspondences between the contents of the X field 60 and the base register address can therefore be selected by the programmer. According to the address expanding system of the present invention, a greater memory capacity can be obtained while holding the compatibility with the TOSBAC-40 system. Further, the size of one segment can be enlarged from 4 KB to 64 KB.

Although only two exemplary embodiments of this invention have been described in detail above, those skilled in the art will readily appreciate that many other embodiments are possible without materially departing from the novelty teachings and advantages of this invention. For example, various modifications are available for the field position and the number of bits of the instruction and also the number of bits of the registers. Further, in the embodiments described above, two adders are used. However, only one adder may be used in place of the two. Still further, the addition may be effected at the ALU. Moreover, the hardware described above can be realized by microprograms. In addition, the mapping table MT 92 can be comprised of a read only memory.

**Claims**

1. An address expanding system comprising:
a main memory (20),
an instruction register (36) which is coupled to said main memory (20) and stores an instruction read from said main memory (20), said instruction including a common address modification field (60) for specifying an index address modification and a base address modification, and a displacement (62);
a plurality of general registers (42) which are connected through a bus to the instruction register, the contents of one of said general registers being added to make a memory address in the index address modification;
a plurality of base registers (52) which are coupled through the bus to the instruction register, the contents of one of said base registers being added to make a memory address in the base address modification;

base register address generating means (76) which receives a first data from the common address modification field and produces a second data for sepcifying one of the base registers; and

adding means (68, 74) which is coupled to said instruction register, said general registers and said base registers and which adds the contents of said displacement, said general register and said base register,
wherein said adding means (68, 74) comprises:
a first adder (68) which is coupled to said general registers and the instruction register (36) and which adds the contents of one of said general registers and those of said displacement (62) for the index address modification, and a second adder (74) which is connected to said base registers (52) and said first adder (68) and which adds the contents of one of said base registers (52) and those of said first adder (68) for the base address modification,
characterized in that
said base register address generating means (76) comprises a code converting logic ($78_1$—$78_3$) connected between said common address modification field (60), all bits of which are used both for specifying a base register address and a general register address, and said plurality of base registers (52) for specifying one of the base registers (52), and
address modification inhibiting means (88, 90) is coupled to the common address modification field (60) of said instruction register (36) and said first adder (68) to inhibit the addition of the contents of one of the general registers and passing the contents of said displacement (62), thus effecting only base address modification.

2. An address expanding system according to claim 1, wherein a memory address register (26) is connected to said main memory (20) through a memory bus (22) and to a source bus (24) and in which an address to access said main memory (20) is latched, and a memory data register (28) is connected through the memory bus (22) to said main memory (20) and to the source bus (24) and in which data read from said main memory (20) or data to be loaded into the same is latched in accordance with the address latched in said memory address register (26).

3. An address expanding system according to claim 1 or 2, wherein said plurality of general registers (42) is connected between said common address modification field (60) and said first adder (68) for supplying the contents of one of the general registers (42) to the first adder (68).

4. An address expanding system according to anyone of claims 1 to 3, wherein said base register address generating means (76) comprises a mapping table consisting of a read only memory.

5. An address expanding system according to any one of claims 1 to 3, wherein said base register address generating means (76) comprises a mapping table consisting of a random access memory.

6. An address expanding system according to anyone of claim 1 to 3, wherein said base register address generating means (76) comprises a mapping table consisting of registers.

**Patentansprüche**

1. Adressenerweiterungssystem, umfassend einen Hauptspeicher (20),

ein mit dem Hauptspeicher (20) verbundenes Befehlsregister (36) zum Speichern eines aus dem Hauptspeicher (20) ausgelesenen Befehls, der ein gemeinsames Adressen-Modifikationsfeld (60) zum Bezeichnen einer Index adreßmodifikation und einer Basis- oder Grundadreßmodifikation sowie ein Distanzfeld (62) enthält,

eine Anzahl von Hauptregistern (42), die über eine Sammelschiene (Bus) mit dem Befehlsregister verbunden sind, wobei der Inhalt eines der Hauptregister zur Bildung einer Speicheradresse in der Indexadreßmodifikation addiert wird,

eine Anzahl von Basisregistern (52), die über die Sammelschiene mit dem Befehlsregister verbunden sind, wobei der Inhalt eines der Basisregister zur Bildung einer Speicheradresse in der Basisadreßmodifikation addiert wird,

eine Basisregister-Adreßerzeugungseinheit (76), die eine erste Dateneinheit vom gemeinsamen Adressen-Modifikationsfeld abnimmt und eine zweite Dateneinheit zum Bezeichnen eines der Basisregister erzeugt, und

eine Addiereinrichtung (8, 74), die mit dem Befehlsregister, den Hauptregistern und den Basisregistern gekoppelt ist und welche die Inhalte des Distanzfeldes, des Hauptregisters und des Basisregisters addiert,

wobei die Addiereinrichtung (68, 74) folgendes umfaßt:

eine erste Addierstufe (68), die mit den Hauptregistern und dem Befehlsregister gekoppelt ist und den Inhalt des einen der Hauptregister und denjenigen des Distanzfeldes (62) für die Indexadreßmodifikation addiert, und eine zweite Addierstufe (74), die mit den Basisregistern (52) und der ersten Addierstufe (68) verbunden ist und den Inhalt des einen der Basisregister (52) und denjenigen der ersten Addierstufe (68) für die Basisadreßmodifikation addiert, dadurch gekennzeichnet, daß

die Basisregister-Adreßerzeugungseinheit (76) eine codeumwandelnde Logik $(78_1—78_3)$ umfaßt, die zwischen das Gemeinschaftsadressen - Modifikationsfeld (60), dessen Bits sämtlich für die Bezeichnung sowohl einer Basisregisteradresse als auch einer Hauptregisteradresse benutzt werden, und die Anzahl von Basisregistern (52) zum Bezeichnen eines der Basisregister (52) geschaltet ist, und

eine Adreßmodifikations-Sperreinrichtung (88, 90) an das gemeinsame Adressen-Modifikationsfeld (60) des Befehlsregisters (36) und die erste Addierstufe (68) angeschlossen ist, um die Addition des Inhalts eines der Hauptregister auch zu sperren und den Inhalt des Distanzfeldes (62) durchzulassen und damit nur die Basisadreßmodifikation durchzuführen.

2. Adressenerweiterungssystem nach Anspruch 1, dadurch gekennzeichnet, daß ein Speicheradreßregister (26) mit dem Hauptspeicher (20) über eine Speichersammelschiene (22) und mit einer Ursprungssammelschiene (24) verbunden und in ihm eine Adresse für einen Zugriff zum Hauptspeicher (20) verriegelt ist, und ein Speicherdatenregister (28) über die Speichersammelschiene (22) mit dem Hauptspeicher (20) und der Ursprungssammelschiene (24) verbunden ist und in ihm aus dem Hauptspeicher (20) ausgelesene Daten oder in diesen zu ladende Daten nach Maßgabe der im Speicheradreßregister (26) verriegelten Adresse verriegelt sind.

3. Adressenerweiterungssystem nach Anspruch 1 oder 2, dadurch gekennzeichnet, daß die mehreren Hauptregister (42) zwischen das gemeinsame Adressen-Modifikationsfeld (60) und die erste Addierstufe (68) geschaltet sind, um den Inhalt eines der Hauptregister (42) zur ersten Addierstufe (68) zu liefern.

4. Adressenerweiterungssystem nach einem der Ansprüche 1 bis 3, dadurch gekennzeichnet, daß die Basisregister - Adreßerzeugungseinheit (76) eine aus einem Festwertspeicher bestehende Kartierungstabelle umfaßt.

5. Adressenerweitungssystem nach einem der Ansprüche 1 bis 3, dadurch gekennzeichnet, daß die Basisregister - Adreßerzeugungseinheit (76) eine aus einem Randomspeicher bestehende Kartierungstabelle umfaßt.

6. Adressenerweiterungssystem nach einem der Ansprüche 1 bis 3, dadurch gekennzeichnet, daß die Basisregister - Adreßerzeugungseinheit (76) eine aus Registern bestehende Kartierungstabelle umfaßt.

**Revendications**

1. Un système extensible d'adresses comportant:

une mémoire principale (20),

un registre d'instructions (36) qui est couplé à ladite mémoire principale (20) et mémorise une instruction lue à partir de ladite mémoire principale (20), ladite instruction comportant une zone commune (60) de modification d'adresse pour spécifier une modification d'adresse d'index et une modification d'adresse de base, et un déplacement (62);

une pluralité de registres généraux (42) qui sont reliés par une ligne omnibus au registre d'instructions, le contenu de l'un desdits registres généraux étant ajouté pour établir une adresse de mémoire dans la modification d'adresse d'index;

une pluralité de registers de base (52) qui sont couplés par la ligne omnibus au registre d'instructions, le contenu de l'un desdits registres de base étant ajouté pour établir une adresse de mémoire dans la modification d'adresse de base;

des moyens (76) pour engendrer les adresses des registres de base, ces moyens recevant des premières données à partir de la zone commune de modification d'adresse et produisant des secondes données pour spécifier l'un des registres de base;

des moyens additionneurs (68, 74) qui sont couplés audit registre d'instructions, auxdits registres généraux et auxdits registres de base et qui additionne les contenus dudit déplacement, dudit registre général et dudit registre de base,

et dans lequel lesdits moyens additionneurs (68, 74) comportent:

un premier additionneur (68) qui est couplé auxdits registres généraux et au registre d'instructions (36) et qui additionne les contenus de l'un desdits registres généraux et dudit déplacement (62) pour la modification d'adresse d'index, et un second additionneur (74) qui est relié auxdits registres de base et audit premier additionneur (68) et qui additionne les contenus de l'un desdits registres de base (52) et dudit premier additionneur (68) pour la modification d'adresse de base,

caractérisé en ce que

lesdits moyens (76) pour engendrer les adresses des registres de base comportent une logique ($78_1$—$78_3$) de conversion de code qui est reliée entre ladite zone commune (60) de modification d'adresse, dont tous les bits sont utilisés à la fois pour spécifier une adresse de registre de base et une adresse de registre général, et ladite pluralité des registres de base (52) pour spécifier l'un des registers de base (52), et des moyens (88, 90) d'inhibition de modification d'adresse couplés à la zone commune (60) de modification d'adresse dudit registre d'instructions (36) et audit premier additionneur (68) pour inhiber l'addition des contenus de l'un des registres généraux et passer les contenus dudit déplacement (62), pour effectuer ainsi seulement une modification d'adresse de base.

2. Un système extensible d'adresse selon la revendication 1, dans lequel un registre d'adresses de mémoire (26) est relié à ladite mémoire principale (20) par l'intermédiaire d'une ligne omnibus de mémoire (22) et à une ligne omnibus de source (24) et dans lequel est verrouillée une adresse pour accéder à ladite mémoire principale (20), et un registre de données de mémoire (28) est relié par l'intermédiaire de la ligne omnibus de mémoire (22) à ladite mémoire principale (20) et à la ligne omnibus de source (24) et dans lequel les données lues dans ladite mémoire principale (20) ou les données à introduire dans celle-ci sont verrouillées conformément à l'adresse verrouillée dans ledit registre d'adresses de mémoire (26).

3. Un système extensible d'adresses selon la revendication 1 ou 2, dans lequel ladite pluralité de registres généraux (42) est reliée entre ladite zone commune (60) de modification d'adresse et ledit premier additionneur (68) pour délivrer le contenu de l'un des registres généraux (42) au premier additionneur (68).

4. Un système extensible d'adresses selon l'une quelconque des revendications 1 à 3, dans lequel lesdits moyens (76) pour engendrer les adresses des registres de base comportent une table de relevés consistant en une mémoire morte.

5. Un système extensible d'adresse selon l'une quelconque des revendications 1 à 3, dans lequel lesdits moyens (76) pour engendrer les adresses des registres de base comportent une table de relevés consistant en une mémoire à accès sélectif.

6. Un système extensible d'adresses selon l'une quelconque des revendications 1 à 3, dans lequel lesdits moyens (76) pour engendrer les adresses des registres de base comportent une table de relevés consistant en des registres.

# F I G. 1A

| OP | R1 | X | A |
|----|----|---|---|
| 8 | 4 | 4 | 16 |

# F I G. 1B

| OP | R1 | X | B | D |
|----|----|---|---|---|
| 8 | 4 | 4 | 4 | 12 |

# F I G. 3

| OP | R1 | X | A |
|----|----|---|---|
| 8 | 4 | 4 | 16 |

# F I G. 4

| OP | R1 | X | A |
|----|----|---|---|

XR
15W×16bit

BR
8W×24bit

TO MAIN MEMORY 20

F I G. 2

# F I G. 5

TO MAIN MEMORY 20